# EUROPEAN PATENT SPECIFICATION

(11) **EP 4 015 242 B1**
(45) Date of publication and mention of the grant of the patent: **31.01.2024**
(21) Application number: 21212358.2
(22) Date of filing: 03.12.2021
(51) Int. Cl.: B60C 7/12, B60B 25/10, B60C 7/24

(54) **NON-PNEUMATIC TIRE AND RIM ASSEMBLY**
BAUGRUPPE AUS LUFTLOSEM REIFEN UND FELGE
PNEU NON PNEUMATIQUE ET ENSEMBLE JANTE

(30) Priority: 16.12.2020 US 202063126201 P; 28.10.2021 US 202117452662
(43) Date of publication of application: 22.06.2022
(73) Proprietor: The Goodyear Tire & Rubber Company, Akron, OH 44316 (US)
(72) Inventor: DOWNING, Daniel Ray, Uniontown, 44685 (US); YENSHO, Nate Edward, Akron, 44321 (US); KMIECIK, Frank Anthony, Akron, 44313 (US); SKURICH, Michael Stefan, Canton, 44718 (US); EDWARDS, Steven Amos, Akron, 44313 (US); BYATARAYANAPURA GOPALA, Arun Kumar, Copley, 44321 (US)
(74) Representative: Kutsch, Bernd

(56) References cited:
- EP-A1- 1 381 527
- FR-A1- 2 844 480
- US-A- 2 650 633
- US-A- 4 241 775
- US-A- 4 580 610
- US-A1- 2006 249 236
- US-A1- 2019 344 616

## Description

### Field of the Invention

The present invention relates generally to vehicle tires, and more particularly, to a non-pneumatic tire and a non-pneumatic tire and rim assembly.

### Background of the Invention

The pneumatic tire has been the solution of choice for vehicular mobility for over a century. The pneumatic tire is a tensile structure. The pneumatic tire has at least four characteristics that make the pneumatic tire so dominant today. Pneumatic tires are efficient at carrying loads because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

An improved non-pneumatic tire that has all the features of the pneumatic tires but without the drawback of the need for air inflation is desired.

EP 1 381 527 A1 describes an assembly in accordance with the preamble of claim 1. Similar assemblies are also disclosed in FR 2 844 480 A1, US 2019/344616 A1, US 2006/249236 A1 and US 4,241,775 A.

### Summary of the Invention

The invention relates to a non-pneumatic tire and rim assembly in accordance with claim 1.

Dependent claims refer to preferred embodiments of the invention.

### Brief Description of the Drawings

The present invention will be better understood through reference to the following description and the appended drawings, in which:
FIG. 1 is a cross-sectional view of a first embodiment of a non-pneumatic tire mounted on a wheel rim;
FIG. 2 is a cross-sectional view of a second embodiment of a non-pneumatic tire prior to mounting on a wheel rim;
FIG. 3 is a cross-sectional view of the non-pneumatic tire of FIG. 2 shown mounted on a wheel rim; and
FIG. 4 is a closeup cross-sectional view of one half of a non-pneumatic tire and rim assembly of the present invention.

### Definitions

"Axial" and "axially" means the lines or directions that are parallel to the axis of rotation of the tire.

"Bead" or "Bead Core" means generally that part of the tire associated with holding the tire to the rim.

"Circumferential" means lines or directions extending along the perimeter of the surface of the annular tread perpendicular to the axial direction.

"Cord" means one of the reinforcement strands, including fibers, which are used to reinforce the plies.

"Inextensible" means a cord having a relative elongation at break of less than 0.2% at 10% of the breaking load, when measured from a cord extracted from a cured tire.

"Equatorial Plane" means a plane perpendicular to the axis of rotation of the tire passing through the centerline of the tire.

"Ply" means a layer of elastomer comprising radially deployed or otherwise parallel cords.

"Radial" and "radially" mean directions radially toward or away from the axis of rotation of the tire.

"Sidewall" means a portion of a tire between the tread and the bead.

### Detailed Description of Preferred Embodiments of the Invention

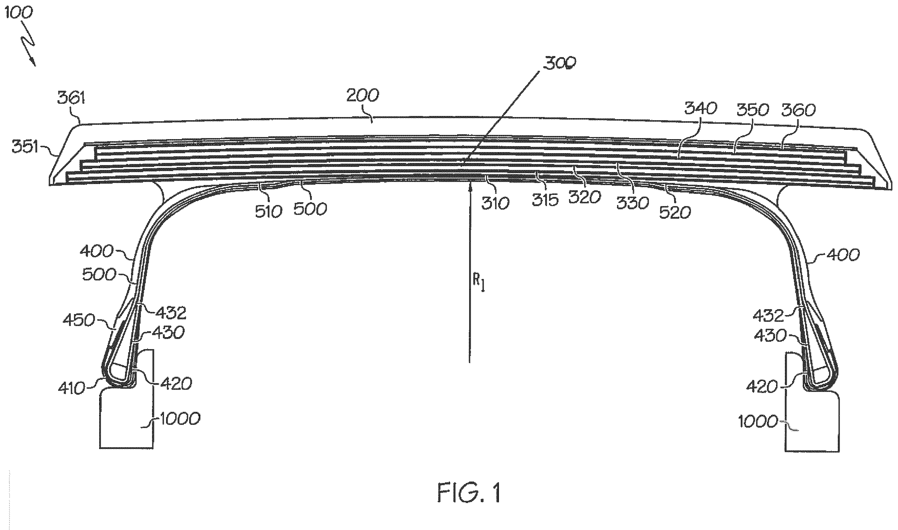

As shown in FIGS. 1-4, a non-pneumatic tire 100 in accordance with an embodiment of the present invention includes a radially outer ground engaging tread 200, which may be a conventional tread as desired, and may include elements such as ribs, blocks, lugs, grooves, and sipes as desired to improve the performance of the tire in various conditions.

The non-pneumatic tire 100 further comprises a shear band 300. The shear band 300 preferably comprised of at least two inextensible reinforcement layers 310, 320 arranged in parallel, and separated by a shear matrix 315 of elastomer.

Each reinforcement layer 310, 320 may be formed of parallel reinforcement cords embedded in a thin elastomeric coating. The reinforcement cords are preferably inextensible, and may be made of steel, aramid, nylon, polyester, or other inextensible structure. In the first reinforced elastomer layer 310, the reinforcement cords are preferably oriented at an angle in the range of from 0 to +/- 50 degrees relative to the tire equatorial plane, and more preferably in the range of from 0 to +/-10 degrees. In the second reinforced elastomer layer 320, the reinforcement cords are oriented preferably at an angle in the range of 0 to +/- 50 degrees relative to the tire equatorial plane, more preferably 0 to +/- 10 degrees. Preferably, the angle of reinforcement cords of the first layer is in the opposite direction of the angle of the reinforcement cords in the second layer.

As shown, the shear band 300 may further optionally include one or more additional reinforcement layers 330, 340, 350, 360 to achieve a desired stiffness.

It is preferred that the radially outermost reinforcement layers 350, 360 have outer lateral ends 351, 361 having a reduced axial width as compared to the radially inner reinforcement layers 310, 320, 330, 340.

The shear matrix layer 315 located between the first and second reinforcement layer 310, 320 and is preferably formed of an elastomer material having a shear modulus Gm in the range of 0.5 to 10 MPa, and more preferably in the range of from 4 to 8 MPA.

The radial thickness of the rubber layer 315 is preferably in the range of from 2.54 mm to 5.08 mm, more preferably 3.8 mm or 3.5 to 4 mm. If additional reinforcement layers 330, 340, 350 360 are utilized, these reinforcement layers may also be optionally separated by the shear layer 315.

The belt package together with the shear layer form the shear band 300. The shear band 300 together with the tread 200 form an outer annular tread band.

As shown in FIG. 1, the non-pneumatic tire 100 in accordance with the present invention includes two axially spaced apart sidewall portions 400 that extend inward from the tread 200 to a rim. The central portion of the tread band is in the range of from 80-90% of the total axial width of the tread band, while the lateral ends or axially outer ends are the remaining balance.

The axially outer ends of the tread band are preferably uncoupled from the carcass.

The radially innermost end 410 of each sidewall portion 400 preferably includes an annular bead 420 having a bead core which is secured to the rim. The non-pneumatic tire 100 further includes a first layer of ply 500 which extends from the first bead 420 to the second bead 422. Preferably, the ply 500 comprises a reinforced rubber or ply layer formed of parallel reinforcement cords that are nylon, polyester, aramid or formed of a merged cord of nylon, polyester of aramid. Preferably, the reinforcements are oriented in the radial direction.

Preferably, the layer of ply extends radially inward from the tread 200 and is then wrapped around the first bead 420 and has a first end 510 that preferably terminates underneath the shear band 300 forming an envelope ply. The second end 520 of the ply likewise extends down from the tread 200, is wrapped around the opposite bead 420, and then terminates preferably underneath the shear band forming an envelope ply.

Thus, each sidewall portion 400 preferably has two effective layers of ply. Alternatively, the first and second ends 510, 520 may wrap around the bead 420 and terminate radially outward of a tip 432 of an apex 430.

Each apex 430 is preferably triangular in shape, and has a radial height as measured from the first or radially innermost end 431 of the apex 430 to the tip 432 or radially outermost end of the apex 430.

The radial position of the outer tip 432 is preferably in the range of from 25 percent to 75 percent of the sidewall radial height, and more preferably in the range of from 33 percent to 67 percent of the sidewall radial height.

Each lower sidewall region which is defined as the lower half of the sidewall, is preferably stiffer relative to the stiffness of the upper half of the sidewall.

The lower sidewall may be increased in stiffness by a relatively stiff apex, or additional stiff material in the lower sidewall region such as a chafer or rim flange protector.

The additional stiff material may be located on the axially outer portion of the lower sidewall, such as a rim flange protector or a chafer, or an axially inner portion such as a secondary apex.

The stiffness, which is the resistance to bending, is characterized by the dynamic modulus G', which are sometimes referred to as the "shear storage modulus" or "dynamic modulus". Reference is made to Science and Technology of Rubber, second edition, 1994, Academic Press, San Diego, Calif., edited by James E. Mark et al, pages 249-254. The shear storage modulus (G') values are indicative of rubber compound stiffness which can relate to tire performance. The tan delta value at 100°C is considered as being indicative of hysteresis, or heat loss.

In a first embodiment, the first apex 430 comprises a relatively stiff rubber composition having a shear storage modulus G' measured at 1% strain and 100°C according to ASTM D5289 ranging from 14 to 43 MPa. In a more preferred embodiment, the first apex 430 comprises a rubber composition having a shear storage modulus G' measured at 1% strain and 100°C according to ASTM D5289 ranging from 23 to 43 MPa.

The stiffened lower sidewall ensures that the ply 500 is in tension after being mounted on the rim, and also during use.

When the ply 500 and sidewall portion 400 of the tire 100 is in the relaxed state, the ply line is curved so that the bead areas 420 are located axially inward of the shoulders or the axially outermost points of the tread band.

When the beads are loaded onto the rim, the curve is straightened and the bead or lower sidewall of the tire 100 is moved axially outwards while still preferably remaining within the axial width of the tire shoulders or the tread band, so that the ply 500 acts as a spring.

In a preferred embodiment, the lower sidewall portion comprises a stiffener element 450 located axially outward of the apex 430. The stiffener element 450 is preferably formed of a relatively stiff material having a shear storage modulus G' measured at 1% strain and 100°C according to ASTM D5289 ranging from 14 to 43 MPa.

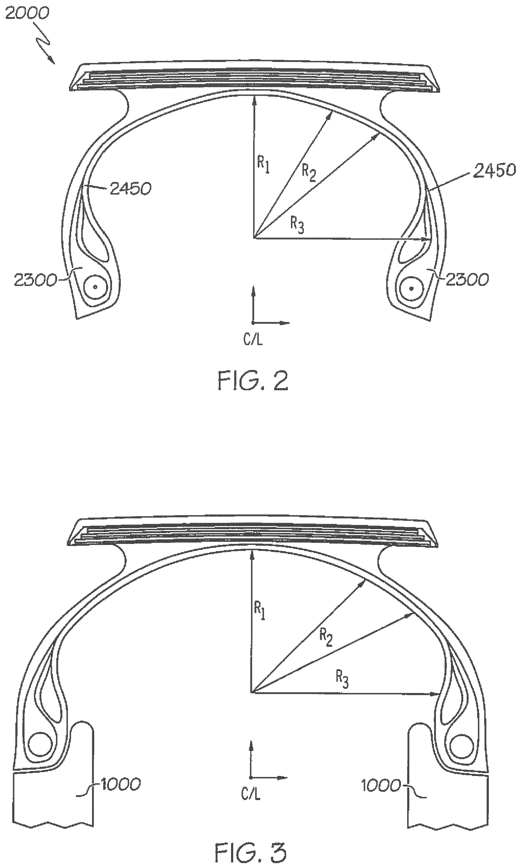

FIG. 2 illustrates a second embodiment of a non-pneumatic tire 2000 in accordance with the present invention for mounting on a rim. By design, the molded ply length is longer than the minimum distance between the molded beads and the shear band. In this embodiment, this is accomplished by making an increased radius R2 at a top 2450 of a second apex 2300. In this design, the radius under the tread R1 is much greater than the radius R2 at the top 2450 of the second apex 2300. This design provides a mechanism for the cords to remain in tension as the shear band deforms into and out of the footprint. The second apex 2300 acts as a spring and provides the stiffness to tension the sidewalls. The shear band is loaded in so that it is compressed circumferentially. This combination of ply geometry will evenly load the shear band across its width, through a size dependent range of rim widths and vertical deflections. In a preferred embodiment, the first and/or second apex each comprise a stiff rubber composition having a shear storage modulus G' measured at 1% strain and 100°C according to ASTM D5289 ranging from 14 to 43 MPa, and more preferably ranging from 23 to 43 MPa.

FIG. 3 illustrates the tire 2000 mounted on the wheel rim with the ply tensioned in the sidewalls. The beads are seated into L-shaped recesses as shown. In order to pretension the ply, the bead ring holders 1000 of the rim surface are displaced axially outward until the desired pretension is reached. The tension of the ply cords ensures that the tire is 100% of a top loader. This is different from a run-flat tire, wherein the stiffened sidewall members carry the load, i.e., the run-flat tire functions as a bottom loader.

As shown in FIG. 3, the shearband layers remain horizontal after the tire sidewalls are pretensioned, because the geometry of the ply line is designed to distribute the compressive shear band loading evenly across the full width of the shear band. The deformed shape of the ply line is between the molded shape and a fully engaged shape. A fully engaged shape is defined as R1 and R3 being minimized to 0 (approaching linear discontinuity), and with R2 approaching infinity (Linear) FIG 2. Maximum rim axial position will remain at or below this fully engaged ply geometry.

The stiffness of each sidewall, and more preferably, the lower half of the sidewall contributes to the top loading of the non-pneumatic tire 2000. The lower half of each sidewall is preferably relatively stiff, and may be stiffened due to a stiff apex, and/or a stiff mass of material located on the axially outer portion such as a chafer or rim flange protector. The sidewalls of the tire were pretensioned by axially expanding the wheel rim. In a preferred embodiment, a chafer or rim flange protector located axially outward of the apex comprises a relatively stiff rubber composition having a shear storage modulus G' measured at 1% strain and 100°C according to ASTM D5289 ranging from 14 to 43 MPa, and more preferably from 23 to 43 MPa.

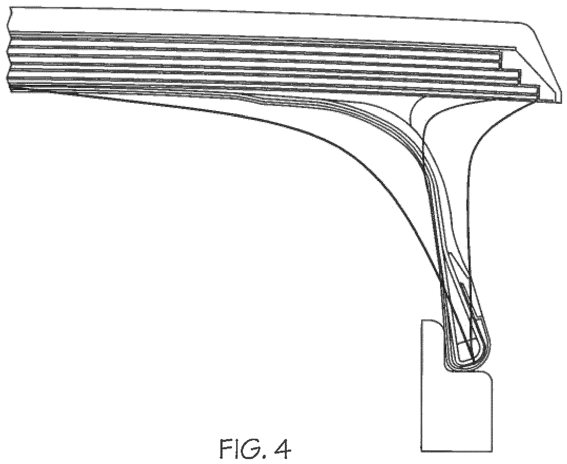

FIG. 4 illustrates an alternate embodiment showing an alternative ply line that has less curvature. The alternate embodiment may also have alternating molded holes in 3 dimensions for reducing weight. This would give the appearance of spokes.

## Claims

1. A non-pneumatic tire and rim assembly comprising:
a rim having a first and second bead ring holder (1000); and
a non-pneumatic tire (100, 2000) having a shear band (300) and tread (200) forming a tread band, and a first and second sidewall region (400);
wherein the first and second sidewall regions (400) each extend from the tread band and terminate into a first and second respective bead area (420);
wherein a carcass ply (500) extends under a crown portion of the non-pneumatic tire (100), into the first and second sidewall regions (400) and to the first and second bead area (420);
wherein the first and second bead area (420) are each mounted on the first and second bead ring holder (1000); and
wherein the carcass ply (500) is tensioned when each bead area (420) is mounted on the respective bead ring holder (1000) of the rim;
**characterized in that**
each bead area (420) is tensioned outward yet located axially inward of a respective lateral outermost end of the tread band when the non-pneumatic tire (100) is mounted on the rim.

2. The non-pneumatic tire and rim assembly of claim 1 wherein the first and second sidewall (400) each have an upper sidewall region that is not connected to a lateral outermost end of the tread band.

3. The non-pneumatic tire and rim assembly of at least one of the previous claims wherein, when the non-pneumatic tire (100) is not mounted on the rim and is in the unloaded condition, the carcass ply (500) has a first radius (R1) under a crown portion of the non-pneumatic tire (100) and a second radius (R2) in an upper sidewall region at location where the respective sidewall region (400) and the shear band (300) are uncoupled, and wherein the first radius (R1) is greater than the second radius (R2).

4. The non-pneumatic tire and rim assembly of at least one of the previous claims wherein the shear band (300) is loaded in compression when the non-pneumatic tire (100) is mounted on the rim.

5. The non-pneumatic tire and rim assembly of at least one of the previous claims wherein the shear band (300) is compressed circumferentially when the non-pneumatic tire (100) is mounted on the rim.

6. The non-pneumatic tire and rim assembly of at least one of the previous claims wherein the axial distance between the first and second bead ring holders (1000) is axially adjustable.

7. The non-pneumatic tire and rim assembly of at least one of the previous claims wherein each sidewall region (400) has at least two layers of ply.

8. The non-pneumatic tire and rim assembly of at least one of the previous claims wherein the first end and the second end of the carcass ply (500) are located in the crown portion of the non-pneumatic tire (100) and/or wherein the carcass ply (500) extends around each respective bead core in the bead area (420) of the non-pneumatic tire (100).

9. The non-pneumatic tire and rim assembly of at least one of the previous claims wherein the sidewalls regions (400) are angled at an angle in a range of from 70 to 85 degrees with respect to a horizontal line connecting the radially outermost points of the first and second bead ring holder (1000).

10. The non-pneumatic tire and rim assembly of at least one of the previous claims wherein each bead area further includes an apex (430, 2300).

11. The non-pneumatic tire and rim assembly of claim 10 wherein the apex (430, 2300) is formed of a relatively stiff material having a shear storage modulus G' measured at 1% strain and 100°C according to ASTM D5289 ranging from 14 to 43 MPa.

12. The non-pneumatic tire and rim assembly of at least one of the previous claims wherein each bead area (420) further includes a second apex (2300), wherein the second apex (2300) is formed of a relatively stiff material having a shear storage modulus G' measured at 1 % strain and 100°C according to ASTM D5289 ranging from 14 to 43 MPa.

13. The non-pneumatic tire and rim assembly of at least one of the previous claims wherein a lower sidewall portion comprises a stiffener element (450) located axially outward of the apex (430), and wherein the stiffener element (450) is formed of a relatively stiff material having a shear storage modulus G' measured at 1% strain and 100°C according to ASTM D5289 ranging from 14 to 43 MPa.

14. The non-pneumatic tire and rim assembly of at least one of the previous claims wherein a lower sidewall portion has a chafer, and wherein the chafer is formed of a relatively stiff material having a shear storage modulus G' measured at 1% strain and 100°C according to ASTM D5289 ranging from 14 to 43 MPa.

## Patentansprüche

1. Nicht-pneumatische Reifen- und Felgenbaugruppe, umfassend:
eine Felge, die einen ersten und zweiten Wulstringhalter (1000) hat; und
einen nicht-pneumatischen Reifen (100, 2000), der ein Scherband (300) und eine Lauffläche (200) hat, die ein Laufflächenband bilden, und einen ersten und zweiten Seitenwandbereich (400);
wobei der erste und zweite Seitenwandbereich (400) sich jeweils von dem Laufflächenband erstrecken und in einem ersten bzw. zweiten Wulstbereich (420) enden;
wobei eine Karkassenlage (500) sich unter einem Zenitabschnitt des nicht-pneumatischen Reifens (100) in den ersten und zweiten Seitenwandbereich (400) und zu dem ersten und zweiten Wulstbereich (420) erstreckt;
wobei der erste und zweite Wulstbereich (420) jeweils auf dem ersten und zweiten Wulstringhalter (1000) montiert sind; und
wobei die Karkassenlage (500) gespannt ist, wenn jeder Wulstbereich (420) auf dem jeweiligen Wulstringhalter (1000) der Felge montiert ist;
**dadurch gekennzeichnet, dass**
jeder Wulstbereich (420) nach außen gespannt ist, jedoch axial innerhalb eines jeweiligen seitlichen äußersten Endes des Laufflächenbandes angeordnet ist, wenn der nicht-pneumatische Reifen (100) auf der Felge montiert ist.

2. Nicht-pneumatische Reifen- und Felgenbaugruppe nach Anspruch 1, wobei die erste und zweite Seitenwand (400) jeweils einen oberen Seitenwandbereich aufweisen, der nicht mit einem seitlichen äußersten Ende des Laufflächenbandes verbunden ist.

3. Nicht-pneumatische Reifen- und Felgenbaugruppe nach mindestens einem der vorhergehenden Ansprüche, wobei, wenn der nicht-pneumatische Reifen (100) nicht auf der Felge montiert ist und sich im unbelasteten Zustand befindet, die Karkassenlage (500) einen ersten Radius (R1) unter einem Zenitabschnitt des nicht-pneumatischen Reifens (100) und einen zweiten Radius (R2) in einem oberen Seitenwandbereich an einer Stelle aufweist, an der der jeweilige Seitenwandbereich (400) und das Scherband (300) entkoppelt sind, und wobei der erste Radius (R1) größer als der zweite Radius (R2) ist.

4. Nicht-pneumatische Reifen- und Felgenbaugruppe nach mindestens einem der vorhergehenden Ansprüche, wobei das Scherband (300) auf Druck belastet wird, wenn der nicht-pneumatische Reifen (100) auf der Felge montiert ist.

5. Nicht-pneumatische Reifen- und Felgenbaugruppe nach mindestens einem der vorhergehenden Ansprüche, wobei das Scherband (300) in Umfangsrichtung zusammengedrückt wird, wenn der nicht-pneumatische Reifen (100) auf der Felge montiert ist.

6. Nicht-pneumatische Reifen- und Felgenbaugruppe nach mindestens einem der vorhergehenden Ansprüche, wobei der axiale Abstand zwischen dem ersten und zweiten Wulstringhalter (1000) axial einstellbar ist.

7. Nicht-pneumatische Reifen- und Felgenbaugruppe nach mindestens einem der vorhergehenden Ansprüche, wobei jeder Seitenwandbereich (400) mindestens zwei Lagen aufweist.

8. Nicht-pneumatische Reifen- und Felgenbaugruppe nach mindestens einem der vorhergehenden Ansprüche, wobei das erste Ende und das zweite Ende der Karkassenlage (500) in dem Zenitabschnitt des nicht-pneumatischen Reifens (100) angeordnet sind, und/oder wobei die Karkassenlage (500) sich um jeden entsprechenden Wulstkern in dem Wulstbereich (420) des nicht-pneumatischen Reifens (100) erstreckt.

9. Nicht-pneumatische Reifen- und Felgenbaugruppe nach mindestens einem der vorhergehenden Ansprüche, wobei die Seitenwandbereiche (400) unter einem Winkel in einem Bereich von 70 bis 85 Grad in Bezug auf eine horizontale Linie abgewinkelt sind, die die radial äußersten Punkte des ersten und zweiten Wulstringhalters (1000) verbindet.

10. Nicht-pneumatische Reifen- und Felgenbaugruppe nach mindestens einem der vorhergehenden Ansprüche, wobei jeder Wulstbereich ferner ein Kernprofil (430, 2300) aufweist.

11. Nicht pneumatische Reifen- und Felgenbaugruppe nach Anspruch 10, wobei das Kernprofil (430, 2300) aus einem relativ steifen Material gebildet ist, das ein bei 1 % Dehnung und 100°C gemäß ASTM D5289 gemessenes Scherspeichermodul G' hat, das im Bereich von 14 bis 43 MPa liegt.

12. Nicht-pneumatische Reifen- und Felgenbaugruppe nach mindestens einem der vorhergehenden Ansprüche, wobei jeder Wulstbereich (420) ferner ein zweites Kernprofil (2300) aufweist, wobei das zweite Kernprofil (2300) aus einem relativ steifen Material gebildet ist, das ein bei 1 % Dehnung und 100°C gemäß ASTM D5289 gemessenes Scherspeichermodul G' hat, das im Bereich von 14 bis 43 MPa liegt.

13. Nicht-pneumatische Reifen- und Felgenbaugruppe nach mindestens einem der vorhergehenden Ansprüche, wobei ein unterer Seitenwandabschnitt ein Versteifungselement (450) aufweist, das axial außerhalb des Kernprofils (430) angeordnet ist, und wobei das Versteifungselement (450) aus einem relativ steifen Material gebildet ist, das ein bei 1 % Dehnung und 100°C gemäß ASTM D5289 gemessenes Scherspeichermodul G' hat, das im Bereich von 14 bis 43 MPa liegt.

14. Nicht-pneumatische Reifen- und Felgenbaugruppe nach mindestens einem der vorhergehenden Ansprüche, wobei ein unterer Seitenwandabschnitt ein Wulstschutzband aufweist, und wobei das Wulstschutzband aus einem relativ steifen Material gebildet ist, das ein bei 1 % Dehnung und 100°C gemäß ASTM D5289 gemessenes Scherspeichermodul G' hat, das im Bereich von 14 bis 43 MPa liegt.

## Revendications

1. Assemblage de jante et de bandage non pneumatique qui comprend :
une jante qui possède un premier et un deuxième support de talon annulaire (1000) ; et
un bandage non pneumatique (100, 2000) qui possède une bande de cisaillement (300) et une bande de roulement (200) qui forme une bande faisant office de bande de roulement, ainsi qu'une première et deuxième zone (400) faisant office de flancs ;
dans lequel la première et la deuxième zone (400) faisant office de flancs s'étendent chacune à partir de la bande faisant office de bande de roulement et se terminent en une première et une deuxième zone de talon respective (420) ;
dans lequel une nappe de carcasse (500) s'étend en dessous d'une portion du bandage non pneumatique (100), faisant office de sommet, jusque dans la première et la deuxième zone (400) faisant office de flancs et jusqu'à la première et la deuxième zone (420) faisant office de talons ;
dans lequel la première et la deuxième zone (420) faisant office de talon sont chacune montées sur le premier et le deuxième support de talon annulaire (1000) ; et
dans lequel la nappe de carcasse (500) est mise sous tension lorsque chaque zone (420) faisant office de talon est montée sur le support respectif de talon annulaire (1000) de la jante ;
**caractérisé en ce que**
chaque zone (420) faisant office de talon est mise sous tension vers l'extérieur tout en étant située, dans la direction axiale, à l'intérieur d'une extrémité latérale respective la plus externe de la bande faisant office de bande de roulement lorsque le bandage non pneumatique (100) est monté sur la jante.

2. Assemblage de jante et de bandage non pneumatique selon la revendication 1, dans lequel la première et la deuxième zone (400) faisant office de flancs possèdent chacune une zone de flanc supérieure qui n'est pas reliée à une extrémité latérale la plus externe de la bande faisant office de bande de roulement.

3. Assemblage de jante et de bandage non pneumatique selon au moins une des revendications précédentes, dans lequel, lorsque le bandage non pneumatique (100) n'est pas monté sur la jante et se trouve à l'état non chargé, la nappe de carcasse (500) possède un premier rayon (R1) en dessous d'une portion du bandage non pneumatique (100), faisant office de sommet, et un deuxième rayon (R2) dans une zone de flanc supérieure à un endroit où la zone respective (400) faisant office de flanc et la bande de cisaillement (300) ne sont pas accouplées, et dans lequel le premier rayon (R1) est supérieur deuxième rayon (R2).

4. Assemblage de jante et de bandage non pneumatique selon au moins une des revendications précédentes, dans lequel la bande de cisaillement (300) est mise sous compression lorsque le bandage non pneumatique (100) est monté sur la jante.

5. Assemblage de jante et de bandage non pneumatique selon au moins une des revendications précédentes, dans lequel la bande de cisaillement (300) est comprimée dans la direction circonférentielle lorsque le bandage non pneumatique (100) est monté sur la jante.

6. Assemblage de jante et de bandage non pneumatique selon au moins une des revendications précédentes, dans lequel la distance axiale entre le premier et le deuxième support de talon annulaire (1000) peut être réglée dans la direction axiale.

7. Assemblage de jante et de bandage non pneumatique selon au moins une des revendications précédentes, dans lequel chaque zone (400) faisant office de flanc possède au moins deux couches de nappes.

8. Assemblage de jante et de bandage non pneumatique selon au moins une des revendications précédentes, dans lequel la première extrémité et la deuxième extrémité de la nappe de carcasse (500) sont disposées dans la portion du bandage non pneumatique (100) faisant office de sommet et/ou dans lequel la nappe de carcasse (500) s'étend autour de chaque tringle de talon respective dans la zone (420) du bandage non pneumatique (100), faisant office de talon.

9. Assemblage de jante et de bandage non pneumatique selon au moins une des revendications précédentes, dans lequel les zones (400) faisant office de flancs forment un angle qui se situe dans une plage allant de 70 à 85 degrés par rapport à une ligne horizontale qui relie les points les plus externes du premier et du deuxième support de talon annulaire (1000), dans la direction radiale.

10. Assemblage de jante et de bandage non pneumatique selon au moins une des revendications précédentes, dans lequel chaque zone faisant office de talons englobe en outre un bourrage sur tringle (430, 2300).

11. Assemblage de jante et de bandage non pneumatique selon la revendication 10, dans lequel le bourrage sur tringle (430, 2300) est réalisé à partir d'une matière relativement rigide qui possède un module de stockage en cisaillement G', mesuré à une déformation de 1 % et à 100°C conformément à la norme ASTM D5289, qui se situe dans une plage allant de 14 à 43 MPa.

12. Assemblage de jante et de bandage non pneumatique selon au moins une des revendications précédentes, dans lequel chaque zone (420) faisant office de talons englobe en outre un deuxième bourrage sur tringle (2300), dans lequel le deuxième bourrage sur tringle (2300) est réalisé à partir d'une matière relativement rigide qui possède un module de stockage en cisaillement G', mesuré à une déformation de 1 % et à 100 °C conformément à la norme ASTM D5289, qui se situe dans une plage allant de 14 à 43 MPa.

13. Assemblage de jante et de bandage non pneumatique selon au moins une des revendications précédentes, dans lequel une portion inférieure de flanc comprend un élément de rigidification (450) qui est situé, dans la direction axiale, à l'extérieur du bourrage sur tringle (430), et dans lequel l'élément de rigidification (450) est réalisé à partir d'une matière relativement rigide qui possède un module de stockage en cisaillement G', mesuré à une déformation de 1 % et à 100 °C conformément à la norme ASTM D5289, qui se situe dans une plage allant de 14 à 43 MPa.

14. Assemblage de jante et de bandage non pneumatique selon au moins une des revendications précédentes, dans lequel une portion inférieure de flanc possède une bandelette talon, et dans lequel la bandelette talon est réalisée à partir d'une matière relativement rigide qui possède un module de stockage en cisaillement G', mesuré à une déformation de 1 % et à 100 °C conformément à la norme ASTM D5289, qui se situe dans une plage allant de 14 à 43 MPa.
